# EUROPEAN PATENT APPLICATION

(11) **EP 1 577 181 A1**
(43) Date of publication of application: **21.09.2005**
(21) Application number: 05101147.6
(22) Date of filing: 16.02.2005
(51) Int. Cl.: B60R 25/10

(54) **Communication system for motor vehicle**

(30) Priority: 17.03.2004 SE 0400672
(71) Applicant: Scania CV AB (publ), 151 87 Södertälje (SE)
(72) Inventor: Bergsten, Fredrik, 155 34 Nykvarn (SE); Runefelt, Daniel, 151 45 Södertälje (SE)
(74) Representative: Sjögren, Stina

(57) **Abstract**

A communication system, a vehicle (100) with such a communication system (201) and a method, for transmitting a radio message, indicating an unauthorised access to the motor vehicle (100), from a radio transmitter in the communication system is described. A message for triggering the transmission of the radio message is sent from an electronic control unit (202) in the communication system (201) to the radio transmitter for only when power is received from a main power input (211).

## Description

### Technical field

The present invention relates to a communication system for a motor vehicle, which communication system is arranged to send a radio message to a remote location, and to a motor vehicle equipped with such a communication system.

### Description of the prior art

Motor vehicles have been equipped with alarm systems for many years. Simple alarm systems rely on sensors which are arranged to detect any unauthorised access to the motor vehicle, i.e. any attempts to break into the vehicle or to steal the vehicle. The sensors are arranged to trigger a siren that starts to sound in the event of somebody trying to break into the vehicle or trying to steal it. A problem with such an alarm system is that the owner has to be in the vicinity of the vehicle to hear the siren. More advanced alarm systems comprise a transmitter that may transmit a radio message to the owner in event of an unauthorised attempt to access the vehicle. The US patent application 2002/0016673 A1 describes a vehicle including an alarm indicator. In the application the functioning of the alarm in different situations is described. In case the vehicle is stolen an automated phone call is made to the owner who thereby is alerted about the theft. In case the thief disconnects the battery from the vehicle the vehicle automatically connects to a back-up battery and sends out a radio message indicating the vehicle is stolen.

In vehicles of today it has become increasingly popular to use communication buses to communicate radio messages between different electronic control units in the vehicle. The different electronic control units are arranged to control different electrical components in the vehicle. In current vehicles the number of different electronic control units may be very large. When an alarm system comprising a transmitter for transmitting radio messages to the owner is incorporated into a vehicle comprising a communication bus it is obvious that the transmitter also shall utilise the communication bus. However, with the present communication buses all electronic control units have to be powered to enable messages to be sent to the transmitter on the communication bus. With a large number of electronic control units this puts high demands on the back-up battery, which has to deliver much energy to power all electronic control units in the vehicle. Thus, there is a risk that the back-up battery is run down rapidly during attempts to transmit a radio message from the transmitter leaving no spare power for the communication bus.

Thus, there is a need for an alarm system and a motor vehicle which solves this problem.

### Summary of the invention

The present invention aims at providing an alarm system and a motor vehicle, which at least alleviates the problems mentioned above.

An object of the present invention is to provide a communication system, a motor vehicle with such a communication system and a method for such a communication system, which alleviates the demands on the back-up battery.

Another object of the present invention is to provide a communication system, a motor vehicle with such a communication system and a method for such a communication system, which provides for a save of energy from the back-up battery.

These and other objects are fulfilled with a communication system, a vehicle and a method according to the independent claims below. Further, advantages are provided with the features of the dependent claims.

According to a first aspect of the present invention a communication system for a motor vehicle is provided, which communication system comprises a data bus, a radio transmitter for transmitting radio messages, an electronic radio control unit, which is connected to the data bus and which is arranged to control the radio transmitter, a central electronic control unit arranged for sending messages on the communication bus, a main power source providing power to the communication system, a backup power source providing power to the communication system only when the voltage from the main power source is below a predetermined level and at least one sensor, which is connected to the central electronic control unit and which is arranged to sense unauthorised access to the vehicle. When power is received from the backup power source and a signal indicating an unauthorised access is received from said sensor, the central electronic control unit is arranged to monitor when power starts to be received from the main power source and to send, on the communication bus, a message to the electronic radio control unit for transmitting with the radio transmitter a radio message indicating an unauthorised access to the vehicle, when power is received from the main power source.

With a communication system according to the first aspect of the present invention the load on the backup power source is smaller compared with the current communication systems. An advantage with a communication system is that the backup power source may have a small capacity while still providing sufficient power for the central electronic control unit to monitor the sensor for unauthorised access to the motor vehicle for an acceptable time period. Thus, no extra costs are incurred due to a need for a larger backup power source.

The main power source as well as the backup power source may be ordinary batteries. They may be any kind of batteries known to a man skilled in the art.

It is not necessary that the radio control unit and the radio transmitter are separate but they may be integrated as a common device.

Even though the radio transmitter preferably is a cellular telephone the radio transmitter may also be any other kind of radio transmitter known to a man skilled in the art.

According to a second aspect of the present invention a motor vehicle comprising a communication system according to the first aspect of the invention is provided.

According to a third aspect of the present invention a method for sending radio messages in a communication system for a motor vehicle is provided The communication system comprises a data bus, a radio transmitter for transmitting radio messages, at least one electronic radio control unit, which is connected to the data bus and which is arranged to control the radio transmitter, a central electronic control unit arranged for sending messages on the communication bus, a main power source providing power to the communication system, a back-up power source providing power to the communication system only when the voltage from the main power source is below a predetermined level and at least one sensor being arranged to sense unauthorised access to the vehicle. The method comprises the steps of monitoring the sensor and the back-up power source, and in case power is being received from the back-up power source and a signal indicating unauthorised access is received from the sensor, monitoring when power starts to be received from the main power source, and sending a message on the communication bus, to the electronic radio control unit, for transmitting a radio message with the radio transmitter when power starts to be received from the main power source.

A method according to the third aspect of the invention provides the same advantages as the communication system according to the first aspect of the invention.

According to a fourth aspect of the present invention an electronic control unit for a motor vehicle is provided The electronic control unit is arranged for reception of a sensor signal indicating an unauthorised access, and comprising a communication bus connector, a main power input for receiving power from a main power source, and a backup power input for receiving power from a backup power source, wherein the electronic control unit is arranged to receive power on the backup power input only when the voltage on the main power input is below a predetermined level. The electronic control unit is further arranged to monitor the sensor signal, if the sensor signal indicates an unauthorised access and the electronic control unit receives power on the backup power connector, to monitor when power starts to be received on the main power connector, and to send a message on the communication bus connector, to an electronic radio control unit controlling a radio transmitter, for transmitting a radio message with the radio transmitter when power starts to be received from the main power source.

With an electronic control unit according to this fourth aspect of the present invention provides for the implementation of the communication system and the method according to the present invention.

The electronic control unit may comprise a sensor signal input. Alternatively, the electronic control unit is arranged to receive the sensor signal on the communication bus connector. The first alternative requires the electronic control unit to have a separate sensor signal input and be arranged for handling information received on an input different from the communication bus.

According to a fifth aspect of the present invention a computer program product which comprises a program is provided. The computer program when run on a computer provides for the computer performing the method according to the invention.

It goes without saying that the different features of the invention described above may be combined in many ways without departing from the invention. In the following embodiments of the invention will be described with reference to the appended drawings.

### Short description of the drawings

Fig 1 shows schematically a vehicle according to an embodiment of the present invention.

Fig 2 shows schematically a communication system according to the present invention.

Fig 3 shows a flow diagram over the function of the communication system.

### Description of embodiments of the invention

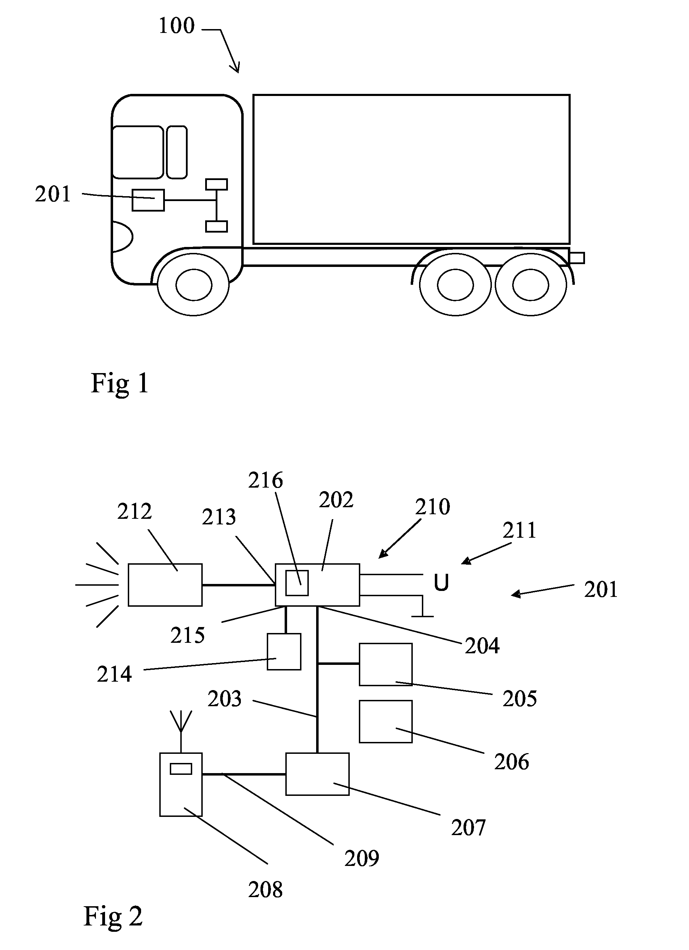

Fig 1 shows schematically a motor vehicle 100 with a communication system 201 according to an embodiment of the invention, while fig 2 schematically shows the communication system 1 in more detail. The communication system comprises a central electronic control unit 202 which is connected to a communication bus 203 through a communication bus connector 204. Also connected to the communication bus are a first electronic control unit 205, a second electronic control unit 206, and a third electronic control unit 207. The third electronic control unit 207 is connected to a radio transmitter in the form of a cellular telephone 208 with a cable 209. The third electronic control unit 206 may also be integrated with the cellular telephone 208. A main power input 210 is connected to a main power source in the form of a battery 211. A backup power source in the form of a battery is integrated into a siren 212 and is connected to a backup power input 213. A sensor 214 for sensing an unauthorised access to the motor vehicle 100 is arranged in direct communication with a sensor input 215 on the central electronic control unit 202. The sensor 214 may be any type of sensor such as a vibration sensor. The sensor may also be connected to or form part of an electronic control unit and communicate with the central electronic control unit 201 via the communication bus 203.

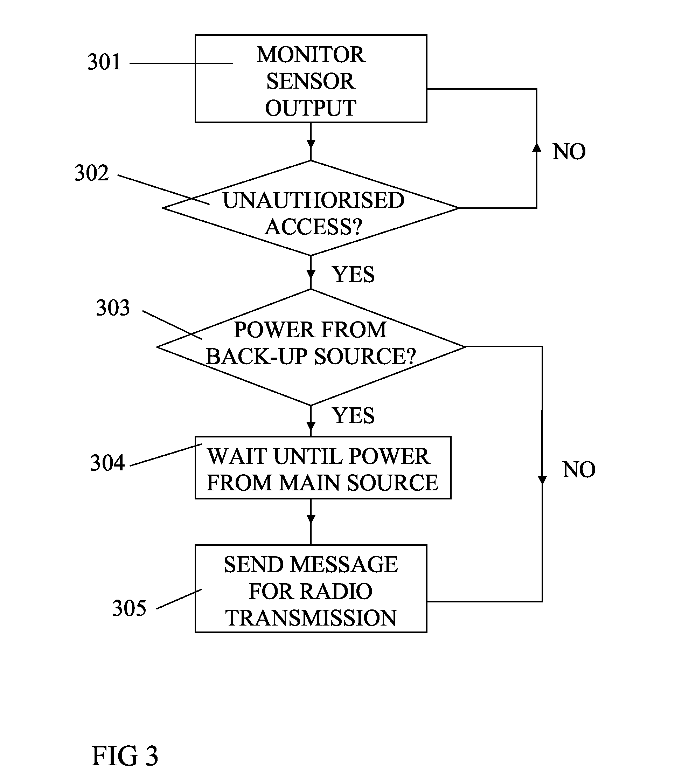

The operation of the communication system will now be described with reference to the flow diagram in fig 3. In step 301 the central electronic control unit 202 monitors the signal on the sensor input 215. In case of the sensor 214 sensing an unauthorised access to the vehicle the sensor 214 will send a signal to the sensor input 215. In step 302 the decision is made that there has been an attempt to an unauthorised access. In step 303 it is checked whether power is received on the main power input 213 or on the backup power input 210. In this context it is obvious for a man skilled in the art that it is possible to do the check by only checking whether the main power source functions properly. In case power is received on the main power input 210 the process jumps directly to step 305, while if power is received on the backup power input the process goes to step 304 where it waits while monitoring the main power input 210. When power starts to be received on the main power input 210 the central electronic control unit 202 sends a message on the communication bus to the electronic radio control unit 207. When the message has been received by the electronic radio control unit 207 it controls the radio transmitter 208 to transmit a radio message to predetermined persons. The radio transmitter 208 may be any kind of radio transmitter and the radio message may be any type of radio message. However, the radio transmitter is preferably a cellular telephone and the radio message is preferably an ordinary text message.

During the time period when the central electronic control unit monitors the main power input, information on the radio message to be transmitted may be stored in a memory 216 in the central electronic control unit. The memory may be of any type known to a man skilled in the art such as ROM (read only memory), PROM (programmable ROM), EPROM (erasable PROM), EEPROM (electrically erasable PROM), flash memory, RAM (random access memory), SRAM (static RAM) or DRAM (dynamic RAM).

The communication bus may be any type of communication bus known to a man skilled in the art. For instance, the Controller Area Network (CAN), the Time Triggered CAN (TTCAN), the FlexRay, the Media Oriented System Transport (MOST) and the ByteFlight standards specify means of accomplishing networks in trucks, busses and other motor vehicles. By means of a CAN, or a similar network, a very large number of vehicle functions may be accomplished based on relatively few ECUs. Namely, by combining resources from two or more ECUs a flexible and efficient over-all vehicular design is obtained. Moreover, multiple networks in a vehicle may be interconnected, so that ECUs belonging to different networks in the vehicle may exchange information. Typically, an ECU is used also to accomplish this bridging between the networks.

The reason for the central electronic control unit to switch to receiving power from the backup power input 213 is that the voltage on the main power input 210 is below a predetermined level. The low voltage on the main power input 210 may be caused by a disconnection of the main power source 11 or by a low charge level in the main power source 11. The main power source may be an ordinary battery. A person trying to make an unauthorised access to the vehicle may also try to disconnect the battery before the access. The unauthorised access may be a break-in into the motor vehicle or an attempt to steal the motor vehicle.

It is obvious for a man skilled in the art that the embodiments described above may be amended in numerous ways without departing from the spirit and scope of the present invention, which is limited only by the claims.

The number of electronic control units in the communication system is not limited to three but there may be any number of electronic control units in the communication system.

All of the process steps, as well as any sub-sequence of steps, described with reference to the figures above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

## Claims

1. Communication system (201) for a motor vehicle (100), which communication system (201) comprises a communication bus (203), a radio transmitter (208) for transmitting radio messages, an electronic radio control unit (207), which is connected to the communication bus (203) and which is arranged to control the radio transmitter (208), a central electronic control unit arranged for sending messages on the communication bus (203), a main power source (211) providing power to the communication system (201), a backup power source (212) providing power to the communication system only when the voltage from the main power source (211) is below a predetermined level and at least one sensor (214), which is connected to the central electronic control unit (202) and which is arranged to sense unauthorised access to the vehicle (100), **characterised in that**, when power is received from the backup power source (212) and a signal indicating an unauthorised access is received from said sensor (214), the central electronic control unit (202) is arranged to monitor when power starts to be received from the main power source (211) and to send, on the communication bus (203), a message to the electronic radio control unit (207) for transmitting with the radio transmitter (208) a radio message indicating an unauthorised access to the vehicle (100), when power is received from the main power source (211).

2. Communication system according to claim 1, wherein the backup power source (212) is a battery.

3. Communication system according to any one of claims 1 or 2, wherein the radio control unit (207) and the radio transmitter (208) are integrated as a common device.

4. Communication system according to any one of the preceding claims, wherein the radio transmitter (208) is a cellular telephone.

5. Motor vehicle (100) comprising a communication system (201) according to any one of the preceding claims.

6. Method for sending radio messages in a communication system (201) for a motor vehicle (100), which communication system comprises a communication bus (203), a radio transmitter (208) for transmitting radio messages, at least one electronic radio control unit (207), which is connected to the communication bus (203) and which is arranged to control the radio transmitter (208), a central electronic control unit (202) arranged for sending messages on the communication bus (203), a main power source (211) providing power to the communication system (201), a back-up power source (212) providing power to the communication system (201) only when the voltage from the main power source (211) is below a predetermined level and at least one sensor (214) being arranged to sense unauthorised access to the motor vehicle (100), **characterised in** the steps of
monitoring the sensor (214) and the back-up power source (212), and in case power is being received from the back-up power source (212) and a signal indicating unauthorised access is received from the sensor (214),
monitoring when power starts to be received from the main power source (211), and
sending a message on the communication bus (203), to the electronic radio control unit (207), for transmitting a radio message with the radio transmitter (208) when power starts to be received from the main power source (211).

7. Method according to claim 6, wherein the radio message is a cellular telephone message.

8. Electronic control unit for a motor vehicle (100), arranged for reception of a sensor signal indicating an unauthorised access, and comprising a communication bus connector (204), a main power input (210) for receiving power from a main power source (211), and a backup power input (213) for receiving power from a backup power source (212), wherein the electronic control unit (202) is arranged to receive power on the backup power input (213) only when the voltage on the main power input (210) is below a predetermined level, **characterised in that** it is arranged to monitor the sensor signal,
if the sensor signal indicates an unauthorised access and the electronic control unit (202) receives power on the backup power input (213), to monitor when power starts to be received on the main power input (210), and
to send a message on the communication bus connector (204), to an electronic radio control unit (207) controlling a radio transmitter (208), for transmitting a radio message with the radio transmitter (208) when power starts to be received on the main power input (210).

9. Electronic control unit according to claim 8, wherein the electronic control unit (202) comprises a sensor signal input (215).

10. Electronic control unit according to claim 8, wherein the electronic control unit is arranged to receive the sensor signal on the communication bus connector (204).

11. Computer program product which comprises a program, which when run on a computer provides for the computer performing the method of claim 6.
